(19) Europäisches Patentamt
European Patent Office
Office européen des brevets

(11) EP 4 368 661 A1

(12) **EUROPEAN PATENT APPLICATION**
published in accordance with Art. 153(4) EPC

(43) Date of publication:
**15.05.2024 Bulletin 2024/20**

(21) Application number: **22837801.4**

(22) Date of filing: **27.04.2022**

(51) International Patent Classification (IPC):
*C08J 5/18* (2006.01)          *C08L 67/02* (2006.01)
*C08G 63/16* (2006.01)         *C08G 63/199* (2006.01)

(52) Cooperative Patent Classification (CPC):
**C08G 63/16; C08G 63/199; C08J 5/18; C08L 67/02**

(86) International application number:
**PCT/KR2022/006017**

(87) International publication number:
**WO 2023/282447 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.07.2021 KR 20210087837**

(71) Applicant: **SK microworks Co., Ltd.**
**Suwon-si, Gyeonggi-do 16336 (KR)**

(72) Inventors:
• **KIM, Chul Kyu**
**Suwon-si, Gyeonggi-do 16338 (KR)**
• **KIM, Yong Deuk**
**Suwon-si, Gyeonggi-do 16338 (KR)**
• **YANG, Joo Ho**
**Suwon-si, Gyeonggi-do 16338 (KR)**

(74) Representative: **Dehns**
**St. Bride's House**
**10 Salisbury Square**
**London EC4Y 8JD (GB)**

(54) **POLYESTER FILM, AND HEAT-SHRINKABLE LABEL AND PACKAGING MATERIAL COMPRISING SAME**

(57) A polyester film according to one embodiment has improved thermal properties and chemical properties by controlling the crystallinity of a copolymerized polyester and, particularly, exhibits excellent shrinkage per unit temperature as well as adhesiveness by means of a solvent, and thus is suitable for a heat-shrinking process and a seaming process. Therefore, the polyester film according to said embodiment can be usefully applied, as a heat-shrinkable label or packaging material, to containers of various products comprising drinks or food.

[Fig. 1]

EP 4 368 661 A1

**Description**

**Technical Field**

Embodiments relate to a polyester film and to a heat shrinkable label and a packaging material comprising the same. Specifically, the embodiments relate to a polyester film with controlled crystallinity and to a heat shrinkable label and a packaging material each of which comprises the same and can be applied to various containers.

**Background Art**

In recent years, as containers for beverages or foods are manufactured in various forms, or there are increased cases in which full packaging is applied in order to attract the attention of consumers, heat shrinkable labels and packaging materials are attracting attention. A heat shrinkable label or packaging material takes advantage of the feature of a polymer film that tends to shrink to a shape before stretching thereof at a certain temperature or higher once it has been oriented by stretching thereof. In a typical process of heat shrinkage labeling or packaging, a heat shrinkable film is cut, printed in a desired design, rolled up, bonded at both ends with an adhesive solvent, loosely wrapped around a container, and then shrunk as heat is applied thereto.

A film used in the above heat shrinkage process is required to have not only such basic properties as thermal resistance, chemical resistance, weatherability, and printability, but also container sealability, heat shrinkage uniformity, running characteristics in the longitudinal direction, and crack resistance. Conventionally, polyvinyl chloride films, polystyrene films, polypropylene films, and the like have been used for this heat shrinking process. In recent years, polyester films having such properties as high thermal resistance and weatherability, convenience of incineration, and excellent printability have been widely used.

However, since a conventional polyester film has a fast shrinkage speed and a high shrinkage stress, there have been defects caused by non-uniform shrinkage or distortions of a plastic container. Thus, Korean Laid-open Patent Publication No. 2002-0062838 discloses a technique in which 5% by weight or more of a polyester elastomer is added to a heat shrinkable polyester film to suppress the generation of wrinkles, shrinkage stains, distortions, and the like when the film is used for full wrapping of plastic bottles.

As such, polyester films used in the heat shrinkage process are prepared with lower crystallinity by blending a soft component with a polyester resin. In addition, they have been developed to have thermal properties such as shrinkage rate and shrinkage stress with respect to temperature, chemical resistance suitable for the seaming process, and recyclability that has recently emerged due to a waste plastic problem.

[Prior Art Document]

[Patent Document]

(Patent Document 1) Korean Laid-open Patent Publication No. 2002-0062838

**Disclosure of Invention**

**Technical Problem**

Most films, including polyester films, conflict between thermal properties and chemical resistance properties, making it difficult to achieve a film that satisfies both of them.

As a result of research conducted by the present inventors, it has been possible to achieve a film that satisfies both thermal properties and chemical resistance properties by controlling the crystallinity of a copolymerized polyester.

Accordingly, the embodiments aim to provide a polyester film that comprises a copolymerized polyester resin with controlled crystallinity, and a heat shrinkable label and a packaging material each of which comprises the same.

Solution to Problem

According to an embodiment, there is provided a polyester film, which comprises a polyester resin in which three or more diols and a dicarboxylic acid are copolymerized, wherein the polyester film has a difference in reversible heat capacity ($\Delta C^0_p$) of 0.25 J/g-K or more before and after the glass transition temperature ($T_g$) as measured when it is subjected to a first scan by a differential scanning calorimeter (DSC) from room temperature to 300°C at a temperature elevation rate of 3°C/minute, followed by cooling thereof, and to a second scan under the same conditions.

According to another embodiment, there are provided a heat shrinkable label and a packaging material comprising the polyester film.

**Advantageous Effects of Invention**

The polyester film according to an embodiment comprising a copolymerized polyester whose crystallinity is controlled is improved in thermal properties and chemical properties. Specifically, it has not only an excellent shrinkage rate with respect to temperature, but also excellent adhesive strength by a solvent, making it suitable for a heat shrinkage process and a seaming process. In addition, such crystal characteristics of the polyester film can be achieved in a desired range by controlling the components and contents of a copolymerized polyester resin constituting it and controlling the process conditions in the preparation process. Accordingly, the polyester film according to the embodiment can be advantageously applied as a heat shrinkable label or packaging material to containers of various products including beverages and foods.

**Brief Description of Drawing**

Fig. 1 shows a difference in heat capacity ($\Delta C^0_p$ and $\Delta C_p$) before and after $T_g$ in a DSC curve of a polyester film.
Fig. 2 shows a difference ($T_m - T_c$) between melting temperature and crystallization temperature in a DSC curve.
Fig. 3 shows a method of measuring the adhesive strength of a polyester film with a solvent in Test Example 2.
Fig. 4 shows a method of measuring the heat shrinkage rate of a polyester film in Test Example 3.

**Best Mode for Carrying out the Invention**

In the following description of the embodiments, in the case where an element is mentioned to be formed "on" or "under" another element, it means not only that one element is directly formed "on" or "under" another element, but also that one element is indirectly formed on or under another element with other element(s) interposed between them.
For the sake of description, the sizes of individual elements in the appended drawings may be exaggeratedly depicted, and they may differ from the actual sizes.
Throughout the present specification, when a part is referred to as "comprising" an element, it is understood that other elements may be comprised, rather than other elements are excluded, unless specifically stated otherwise.
In addition, all numbers expressing the physical properties, dimensions, and the like of elements used herein are to be understood as being modified by the term "about" unless otherwise indicated.
In the present specification, a singular expression is understood to encompass a singular or plural expression, interpreted in context, unless otherwise specified.

**Characteristics of the polyester film**

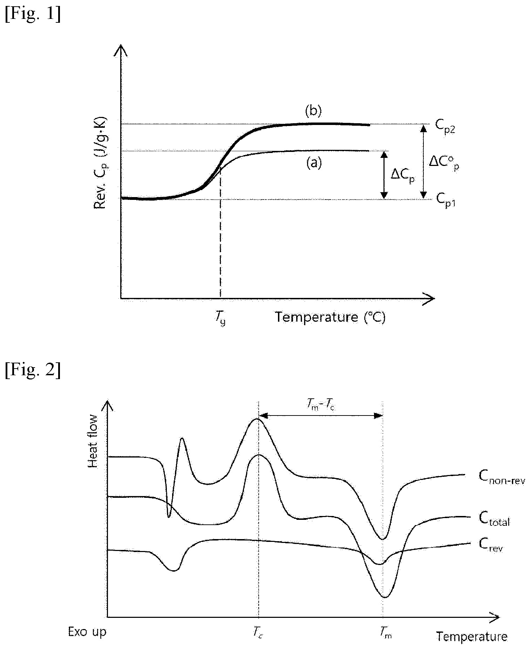

The polyester film according to an embodiment has a difference in reversible heat capacity ($\Delta C^0_p$) of 0.25 J/g·K or more before and after the glass transition temperature ($T_g$) as measured when it is subjected to a first scan by a differential scanning calorimeter (DSC) from room temperature to 300°C at a temperature elevation rate of 3°C/minute, followed by cooling thereof, and to a second scan under the same conditions.
The differential scanning calorimeter (DSC) may be specifically a modulated differential scanning calorimeter (modulated DSC or MDSC), more specifically a temperature-modulated differential scanning calorimeter (temperature-modulated DSC or TMDSC).
According to an embodiment, the polyester film is subjected to a first scan by DSC, followed by cooling thereof, and to a second scan to measure heat capacity. First, the polyester film is subjected to a first scan from room temperature to 300°C at a temperature elevation rate of 3°C/minute, followed by cooling thereof. The cooling may be specifically carried out by quenching. For example, the sample heated to a high temperature after the first scan may be put into a cooler controlled to a temperature of -10°C to 0°C for quenching. Thereafter, the cooled film is subjected to a second scan under the same conditions as those of the first scan, that is, a temperature elevation rate of 3 °C/minute from room temperature to 300°C.
Referring to Fig. 1, the reversible heat capacity curve (a) obtained through the first scan by DSC and the reversible heat capacity curve (b) obtained through the second scan have some differences. This is because the second scan is carried out with the thermal history removed by the first scan and cooling procedures. The heat capacity measured through the first scan varies depending on the film composition as well as post-processing conditions such as stretching and heat-setting, whereas the heat capacity measured through the second scan once the thermal history has been removed is determined only by the inherent properties of the polymer constituting the film.

The glass transition temperature ($T_g$) refers to a temperature at which a material, such as a polymer having an amorphous region, present in a hard and relatively brittle state like glass at low temperatures changes to have viscosity or to a rubber-like state when heated. It may be determined by methods well known in the art. For example, in a reversible heat flow curve or heat capacity curve by DSC, the baseline is kept constant and then steeply changes around a certain temperature where the height of the baseline changes, which temperature may be determined as a glass transition temperature.

Meanwhile, in a DSC curve of a polymer, the change in baseline is observed over a certain temperature section, not at a specific temperature. This is because the glass transition of the polymer takes place over a certain temperature section rather than at a specific temperature. Thus, the temperature where an inflection point (i.e., the position where the curve starts to change from a convex shape to a concave shape, or vice versa) appears in the section in which the baseline of a DSC curve changes may be determined as $T_g$. Specifically, as shown in Fig. 1, an inflection point in a section in which the DSC curve (b) changes from a first baseline ($C_{p1}$) to a second baseline ($C_{p2}$) may be defined as $T_g$.

Thus, the reversible heat capacity before $T_g$ may be determined as a heat capacity corresponding to the baseline ($C_{p1}$) before the inflection point of the DSC curve (b), and the reversible heat capacity after $T_g$ may be determined as a heat capacity corresponding to the baseline ($C_{p2}$) after the inflection point of the DSC curve (b). Thus, the difference in the reversible heat capacity before and after $T_g$ may be calculated as the difference in heat capacity ($\Delta C^0_p$) corresponding to the difference in the baseline before and after the inflection point of the DSC curve.

Meanwhile, if a baseline is inclined in a DSC curve, the heat capacity difference can be calculated after the curve is corrected to be flat. In addition, in a DSC curve, it is also possible to calculate the difference in heat capacity corresponding to the intersection of the tangent at the inflection point and the tangent of each temperature section corresponding to 5°C to 15°C before or after the inflection point. Here, the tangent can be obtained by the least squares method.

The difference in heat capacity before and after $T_g$ in a reversible heat capacity curve obtained by DSC is related to the amorphous region in a film. Thus, the heat shrinkage characteristics of a polyester film can be controlled by adjusting the difference in heat capacity before and after $T_g$. The difference in heat capacity ($\Delta C_p$) before and after $T_g$ obtained from the first scan curve may vary depending on the post-processing conditions of the film. Thus, the crystallinity of the film can be more directly controlled by adjusting the difference in heat capacity before and after $T_g$ ($\Delta C^0_p$), obtained from the second scan curve after the first scan and cooling to remove the thermal history, to a specific range.

According to an embodiment, the difference ($\Delta C^0_p$) in reversible heat capacity before and after the glass transition temperature ($T_g$) measured through the second scan is 0.25 J/g·K or more. For example, the difference in reversible heat capacity ($\Delta C^0_p$) may be 0.25 J/g·K to 0.5 J/g·K or 0.25 J/g·K to 0.4 J/g·K. As another example, the difference in reversible heat capacity ($\Delta C^0_p$) may be 0.3 J/g·K or more or 0.3 J/g·K to 0.45 J/g·K.

Meanwhile, the difference ($\Delta C_p$) in reversible heat capacity before and after the glass transition temperature ($T_g$) measured through the first scan may be 0.01 J/g·K or more, 0.05 J/g·K or more, 0.1 J/g·K or more, 0.15 J/g·K or more, 0.2 J/g·K or more, or 0.25 J/g·K or more. For example, the difference in reversible heat capacity ($\Delta C_p$) may be 0.01 J/g K to 0.4 J/g·K. Specifically, the difference ($\Delta C_p$) in reversible heat capacity may be 0.05 J/g·K to 0.3 J/g·K, 0.05 J/g·K to 0.3 J/g·K, or 0.2 J/g·K to 0.3 J/g·K.

In addition, the difference between $\Delta C^0_p$ and $\Delta C_p$ ($|\Delta C^0_p - \Delta C_p|$) may be 0.01 J/g K to 0.3 J/g·K. More specifically, the difference between $\Delta C^0_p$ and $\Delta C_p$ ($|\Delta C^0_P - \Delta C_p|$) may be 0.05 J/g-K to 0.3 J/g-K or 0.13 J/g-K to 0.2 J/g-K.

In addition, a percentage of $\Delta C^0_p$ to $\Delta C_p$, that is, $X_{ma}$ calculated from $\Delta C^0_p$ and $\Delta C_p$ by the following equation may be adjusted within a specific range.

$$X_{ma} (\%) = \Delta C_p (J/g \cdot K) / \Delta C^0_p (J/g \cdot K) \times 100$$

When the sum of the crystalline region, the mobile amorphous region, and the rigid amorphous region constituting the polyester film is 100%, $X_{ma}$ refers to a mobile amorphous fraction.

In the polyester film, $X_{ma}$ may be 20% or more or 30% or more, for example, 20% to 90% or 30% to 90%. Specifically, in the polyester film, $X_{ma}$ may be 40% or more, more specifically, 40% to 90%.

In addition, in the polyester film, the difference between crystallization temperature ($T_c$) and melting temperature ($T_m$) may be adjusted within a specific range.

As a thermal behavior of a polymer having a crystalline structure, it has a melting temperature ($T_m$), which is the temperature at which crystals are melted, and a crystallization temperature ($T_c$), which is the temperature at which crystals are formed. Thus, it is possible to adjust the thermal resistance of a polymer by adjusting its crystallinity. The measurement of the crystallization temperature and the melting temperature may be carried out by methods well known in the art. For example, differential scanning calorimetry (DSC) may be used.

Referring to Fig. 2, it may be difficult to distinguish an endothermic peak and an exothermic peak in a heat flow

curve ($C_{total}$) of a typical DSC. Thus, it is preferable to divide it into a non-reversible heat flow curve ($C_{non-rev}$) and a reversible heat flow curve ($C_{rev}$) for analysis. The reversible heat flow curve among them is suitable for obtaining a glass transition temperature ($T_g$). The non-reversible heat flow curve is suitable for obtaining a crystallization temperature ($T_c$) and a melting temperature ($T_m$).

In the non-reversible heat flow curve ($C_{non-rev}$) of DSC in Fig. 2, an exothermic peak appears at the crystallization temperature ($T_c$), and an endothermic peak appears at the melting temperature ($T_m$). The difference ($T_m - T_c$) between the crystallization temperature and the melting temperature of the polyester film can be obtained from the DSC curve.

For example, the polyester has a crystallization temperature ($T_c$) and a melting temperature ($T_m$), and the difference between the crystallization temperature (Tc) and the melting temperature ($T_m$) may be 100°C or less, specifically, less than 100°C. For example, the difference between the crystallization temperature ($T_c$) and the melting temperature ($T_m$) may be 95°C or less, 90°C or less, or 85°C or less, more specifically, 50°C to 100°C, 70°C to 100°C, 75°C to 100°C, or 80°C to 100°C. The difference between the crystallization temperature and the melting temperature is directly related to the crystallization rate. Thus, when it is within the above preferred range, the crystallinity of the copolymerized polyester may be controlled such that the thermal properties and chemical properties of the polyester film are improved.

In addition, in the polyester film according to an embodiment, the shrinkage rate with respect to temperature in the main shrinkage direction may be adjusted within a specific range. For example, when the shrinkage rate in the main shrinkage direction of the polyester film upon thermal treatment at a temperature of X°C for 10 seconds is defined as $T_X$, the ranges of $T_{70}$, $T_{75}$, $T_{80}$, $T_{90}$, and $T_{100}$ may be adjusted. The thermal treatment for obtaining Tx may specifically refer to immersing the polyester film in hot water at X°C for 10 seconds.

The polyester film may have a $T_{70}$ of 0% to 30%, 0% to 20%, or 5% to 15%. The polyester film may have a $T_{75}$ of 0% to 40%, 5% to 40%, or 10% to 30%. The polyester film may have a $T_{80}$ of 10% to 60%, 20% to 50%, or 25% to 45%. The polyester film may have a $T_{90}$ of 30% to 90%, 40% to 80%, or 50% to 70%. The polyester film may have a $T_{100}$ of 40% to 90%, 50% to 85%, or 60% to 80%. Specifically, the polyester film may have a shrinkage rate of 60% to 80% in the main shrinkage direction upon thermal treatment at a temperature of 100°C for 10 seconds.

The polyester film may have excellent adhesive strength by a solvent, specifically, an organic solvent.

For example, once two sheets of the polyester film have been adhered by tetrahydrofuran (THF), the peel strength may be 200 gf/in or more. Specifically, the peel strength after adhesion by THF may be 300 gf/in or more, 350 gf/in or more, 400 gf/in or more, or 500 gf/in or more, and, more specifically, 300 gf/in to 2,000 gf/in or 300 gf/in to 1,000 gf/in.

In addition, once two sheets of the polyester film have been adhered by 1,3-dioxolane, the peel strength may be 200 gf/in or more. Specifically, the peel strength upon adhesion by 1,3-dioxolane may be 300 gf/in or more, 500 gf/in or more, 700 gf/in or more, or 900 gf/in or more, and, more specifically, 300 gf/in to 3,000 gf/in or 300 gf/in to 2,000 gf/in.

The peel strength may be measured by, for example, a method in which a solvent is applied onto a polyester film, another sheet of the polyester film is laminated thereon, a pressure of 2 kgf is applied to the area where the solvent has been applied for 1 hour for aging, and the polyester films are then delaminated at a speed of 300 mm/minute and an angle of 180°. In addition, the solvent may be applied in a width of 2 mm and a length of about 3 cm.

## Composition of the polyester film

The polyester film according to an embodiment comprises a copolymerized polyester resin.

For example, the copolymerized polyester resin may be one in which two or more diols and a dicarboxylic acid are copolymerized. Specifically, the copolymerized polyester resin may be one in which three or more diols and a dicarboxylic acid are copolymerized.

The diol may comprise an aliphatic diol, an alicyclic diol, an aromatic diol, or a derivative thereof. The aliphatic diol may be, for example, an aliphatic diol having 2 to 10 carbon atoms, and it may have a linear or branched structure.

As a specific example, the aliphatic diol may comprise ethylene glycol, diethylene glycol, neopentyl glycol, 1,3-propanediol, 1,2-octanediol, 1,3-octanediol, 2,3-butanediol, 1,3-butanediol, 1,4-butanediol, 1,5-pentanediol, 2-butyl-2-ethyl-1,3-propanediol, 2,2-diethyl-1,5-pentanediol, 2,4-diethyl-1,5-pentanediol, 3-methyl-1,5-pentanediol, 1,1-dimethyl-1,5-pentanediol, 1,6-hexanediol, 2-ethyl-3-methyl-1,5-hexanediol, 2-ethyl-3-ethyl-1,5-hexanediol, 1,7-heptanediol, 2-ethyl-3-methyl-1,5-heptanediol, 2-ethyl-3-ethyl-1,6-heptanediol, 1,8-octanediol, 1,9-nonanediol, 1,10-decanediol, a derivative thereof, or any combination thereof.

The dicarboxylic acid may comprise an aromatic dicarboxylic acid, an aliphatic dicarboxylic acid, an alicyclic dicarboxylic acid, or an ester thereof.

For example, the dicarboxylic acid may be terephthalic acid, dimethylterephthalic acid, isophthalic acid, naphthalene dicarboxylic acid, orthophthalic acid, adipic acid, azelaic acid, sebacic acid, decanedicarboxylic acid, an ester thereof, or a combination thereof. Specifically, the dicarboxylic acid may comprise at least one selected from the group consisting of terephthalic acid, dimethyl terephthalate, naphthalene dicarboxylic acid, and orthophthalic acid.

According to an embodiment, the copolymerized polyester resin may be one in which two or more diols and an aromatic dicarboxylic acid are copolymerized. According to another embodiment, the copolymerized polyester resin may be one in which three or more diols and an aromatic dicarboxylic acid are copolymerized. According to still another embodiment, the copolymerized polyester resin may be one in which a diol comprising ethylene glycol and at least one comonomer and an aromatic dicarboxylic acid are copolymerized. According to still another embodiment, the copolymerized polyester resin may be one in which a diol comprising ethylene glycol and at least two comonomers and an aromatic dicarboxylic acid are copolymerized.

The diol may comprise ethylene glycol in an amount of 50% by mole to 90% by mole based on the total number of moles of the diol. For example, the diol may comprise ethylene glycol in an amount of 60% by mole to 90% by mole, 63% by mole to 85% by mole, or 65% by mole to 83% by mole, based on the total number of moles of the diol.

The diol may comprise the comonomer in an amount of 10% by mole to 50% by mole based on the total number of moles of the diol. For example, the diol may comprise the comonomer in an amount of 10% by mole to 40% by mole, 15% by mole to 37% by mole, or 17% by mole to 35% by mole, based on the total number of moles of the diol.

The diol may comprise, as a comonomer, the diols exemplified above except for ethylene glycol.

For example, the diol may comprise, as a comonomer, diethylene glycol, 1,4-cyclohexanedimethanol, 1,3-propanediol, 1,2-octanediol, 1,3-octanediol, 2,3-butanediol, 1,3-butanediol, 1,4-butanediol, 1,5-pentanediol, neopentyl glycol, 2-butyl-2-ethyl-1,3-propanediol, 2,2-diethyl-1,5-pentanediol, 2,4-diethyl-1,5-pentanediol, 3-methyl-1,5-pentanediol, 1,1-dimethyl-1,5-pentanediol, or a combination thereof. Specifically, the comonomer among the diol may comprise at least one selected from the group consisting of neopentyl glycol, cyclohexanedimethanol, and diethylene glycol.

Specifically, the diol comprises ethylene glycol and may comprise, as a comonomer, at least one selected from the group consisting of neopentyl glycol, cyclohexanedimethanol, and diethylene glycol in an amount of 20% by mole to 40% by mole, specifically greater than 21% by mole to 40% by mole.

As an example, the diol may comprise diethylene glycol as a comonomer. The content of diethylene glycol in the diol may be 1% by mole to 15% by mole, for example, 1% by mole to 10% by mole, 1% by mole to 5% by mole, 5% by mole to 10% by mole, or 3% by mole to 7% by mole.

As another example, the diol may comprise, as a comonomer, at least one of neopentyl glycol and cyclohexanedimethanol. The content of comonomer in the diol may be 1% by mole or more, 10% by mole or more, 20% by mole or more, 21% by mole or more, or 25% by mole or more, and 50% by mole or less, 40% by mole or less, or 30% by mole or less. For example, the content of comonomer in the diol may be 1% by mole to 50% by mole, specifically, 10% by mole to 40% by mole, 10% by mole to 30% by mole, 20% by mole to 40% by mole, 20% by mole to 30% by mole, 20% by mole to 25% by mole, or 25% by mole to 30% by mole. More specifically, the diol may further comprise at least one comonomer selected from neopentyl glycol and cyclohexanedimethanol in an amount of 20% by mole to 30% by mole.

Specifically, the diol may comprise, as a comonomer, at least one selected from neopentyl glycol and cyclohexanedimethanol; and diethylene glycol.

As an example, the diol may comprise, as a comonomer, at least one selected from neopentyl glycol and cyclohexanedimethanol in an amount of 20% by mole to 30% by mole; and diethylene glycol in an amount of 1% by mole to 15% by mole.

The dicarboxylic acid may comprise terephthalic acid or dimethyl terephthalate in an amount of 80% by mole or more, 90% by mole or more, or 95% by mole or more, based on the total number of moles of the dicarboxylic acid. In addition, the dicarboxylic acid may comprise almost no isophthalic acid. For example, the content of isophthalic acid in the dicarboxylic acid may be 5% by mole or less, 3% by mole or less, or 1% by mole or less.

Specifically, the diol may comprise, as a comonomer, at least one selected from the group consisting of neopentyl glycol, cyclohexanedimethanol, and diethylene glycol in an amount of 20% by mole to 40% by mole, and the content of isophthalic acid in the aromatic dicarboxylic acid may be less than 1% by mole.

As a specific example, the copolymerized polyester resin may be a glycol-modified polyethylene terephthalate (PETG).

The copolymerized polyester resin may further comprise an alcohol other than the diol, for example, a monohydric alcohol. For example, the monohydric alcohol may be methanol, ethanol, isopropanol, allyl alcohol, or benzyl alcohol. Specifically, the copolyester resin may comprise the monohydric alcohol in an amount of 10 parts by weight to 40 parts by weight or 15 parts by weight to 30 parts by weight based on 100 parts by weight of the diol.

**Process for preparing a polyester film**

The polyester film according to an embodiment may be prepared by a process, which comprises preparing a copolymerized polyester resin; melting and casting the copolymerized polyester resin to obtain a film; and preheating and stretching the cast film and then heat-setting it.

Here, the composition and process conditions are adjusted such that the polyester film finally produced by the above process satisfies the characteristics (shrinkage characteristics and the like) as described above. Specifically, in order for the final polyester film to satisfy the characteristics as discussed above, the composition of the copolymerized polyester resin is adjusted, the extrusion and casting temperatures of the copolymerized polyester resin are adjusted, the preheating temperature, the stretching ratio in each direction, the stretching temperature, the stretching speed, and the like at the time of stretching are adjusted, or thermal treatment and relaxation is carried out after stretching while the thermal treatment temperature and relaxation rate are adjusted.

Hereinafter, each step will be described in more detail.

The copolymerized polyester resin may be prepared through a conventional transesterification reaction and polycondensation reaction. In such an event, the components and contents of the diol and dicarboxylic acid used are as exemplified above.

Thereafter, the copolymerized polyester resin may be melted at a temperature of 260°C to 300°C or 270°C to 290°C and then extruded and cast to obtain a film.

The cast film may be conveyed at a speed of 10 m/minute to 110 m/minute or 50 m/minute to 90 m/minute to pass through a roll and then preheated.

The preheating may be carried out, for example, at 90°C to 120°C for 0.01 minute to 1 minute. Specifically, the preheating temperature may be 95°C to 115°C or 97°C to 113°C, and the preheating time may be 0.05 minute to 0.5 minute or 0.08 minute to 0.2 minute, but they are not limited thereto.

Thereafter, the film may be stretched in a first direction. For example, the stretching may be carried out at a temperature lower than the preheating temperature by at least 20°C in a first direction by 3 times to 5 times. Specifically, the stretching may be carried out at a stretching temperature of 60°C to 90°C, 70°C to 90°C, or 75°C to 85°C, in a first direction by 3 times to 4.5 times, 3.5 times to 4.5 times, or 4 times to 4.5 times, but it is not limited thereto. The stretching may be further carried out in a second direction perpendicular to the first direction. For example, it may be carried out in a second direction at a stretching ratio of 1.1 times to 2 times, specifically, 1.1 times to 1.5 times, as needed.

After stretching, the film may be heat-set. For example, it may be carried out at 70°C to 95°C for 0.01 minute to 1 minute. For example, the heat-setting temperature may be 75°C to 95°C, 75°C to 90°C, 80°C to 90°C, 85°C to 95°C, or 85°C to 90°C, and the heat-setting time may be 0.05 minute to 0.5 minute or 0.08 minute to 0.2 minute. But they are not limited thereto.

Specifically, the difference between the preheating temperature and the heat-setting temperature may be 10°C to 40°C, more specifically, 13°C to 35°C, 11°C to 34°C, 15°C to 34°C, or 20°C to 30°C.

**Effects and uses**

The polyester film according to an embodiment may be enhanced in thermal properties and chemical resistance properties by controlling the crystallinity of the copolymerized polyester. Specifically, the polyester film has not only an excellent shrinkage rate with respect to temperature but also excellent adhesive strength by a solvent, making it suitable for a heat shrinkage process and a seaming process. In addition, such shrinkage characteristics of the polyester film can be achieved in a desired range by controlling the components and contents of a copolymerized polyester resin constituting it and controlling the process conditions in the preparation process.

Accordingly, the polyester film according to the embodiment can be advantageously applied as a heat shrinkable label or packaging material to containers of various products including beverages and foods. The heat shrinkable label or packaging material according to an embodiment comprises the polyester film, and it may further comprise a printing layer, a dye, an adhesive, or the like.

**Mode for the Invention**

Hereinafter, the present invention will be described in more detail with reference to examples, but the scope of the present invention is not limited thereto.

**Examples and Comparative Examples: Preparation of a polyester film**

(1) Preparation of a copolymerized polyester resin

An autoclave equipped with a stirrer and a distillation column was charged with terephthalic acid as a dicarboxylic acid and ethylene glycol and a comonomer as a diol. 0.07 part by weight of manganese acetate as a transesterification catalyst relative to the weight of the dicarboxylic acid was added thereto, followed by heating the mixture to 220°C and the removal of methanol produced as a by-product to carry out the reaction.

Upon completion of the transesterification reaction, 0.07 part by weight of silica having an average particle diameter of 0.28 $\mu$m was added per 100 parts by weight of the dicarboxylic acid, and 0.4 part by weight of trimethyl phosphate as a stabilizer was added. After 5 minutes, 0.035 part by weight of antimony trioxide and 0.005 part by weight of tetrabutylene titanate as a polymerization catalyst were added, followed by stirring for 10 minutes. Subsequently, the reaction mixture was transferred to a second reactor equipped with a vacuum apparatus. The pressure was gradually reduced while the temperature was raised to 285°C, and the polymerization was carried out for about 210 minutes to thereby prepare a composition comprising a copolymerized polyester resin.

(2) Preparation of a film

The composition comprising a copolymerized polyester resin obtained in step (1) was extruded through a T-die at 270°C and then cooled to thereby obtain an unstretched sheet. The unstretched sheet was passed through a roll while it was conveyed at a speed of 55 m/minute to thereby adjust the thickness thereof. The unstretched sheet was preheated at 100 to 110°C for 0.1 minute while it was conveyed at a speed of 55 m/minute and stretched 4.0 to 4.5 times in the transverse direction (TD) at a temperature lower than that by at least 20°C. The stretched sheet was heat set at 70 to 90°C for 0.1 minute to prepare a polyester film having a thickness of 40 $\mu$m.

The components and contents of the comonomers and the process conditions used in the Examples and Comparative Examples are summarized in Table 1 below.

[Table 1]

| | Comonomer content (% by mole) | | | Stretching ratio | Heat setting temp. (°C) |
|---|---|---|---|---|---|
| | NPG | CHDM | DEG | TD | |
| Ex. 1 | 26 | - | 5 | 4.5 | 70 |
| Ex. 2 | 24 | - | 5 | 4.5 | 70 |
| Ex. 3 | 22 | - | 5 | 4.5 | 70 |
| Ex. 4 | 20 | - | 5 | 4.5 | 70 |
| Ex. 5 | 24 | - | 5 | 4.5 | 80 |
| Ex. 6 | 24 | - | 5 | 4.5 | 90 |
| Ex. 7 | - | 22 | 10 | 4.5 | 70 |
| Ex. 8 | - | 20 | 10 | 4.5 | 70 |
| C. Ex. 1 | 18 | - | 1.5 | 4.0 | 70 |
| C. Ex. 2 | 16 | - | 2 | 4.0 | 70 |
| C. Ex. 3 | 14 | - | 1.8 | 4.0 | 70 |
| NPG: neopentyl glycol, CHDM: 1,4-cyclohexanedimethanol, DEG: diethylene glycol | | | | | |

**Test Example 1: DSC analysis**

10-20 mg of a sample of the polyester film was placed in a differential scanning calorimeter (DSC; Q2000, manufacturer: TA Instruments), which was scanned in a modulated differential scanning calorimeter (MDSC) mode from room temperature to 300°C at a temperature elevation rate of 3°C/minute with a temperature modulation of $\pm 0.447$°C every 60 seconds.

The inflection point around which the baseline changed in the reversible heat capacity curve of DSC was determined as the glass transition temperature ($T_g$). The difference in reversible heat capacity before and after $T_g$ was calculated. In this test example, DSC analysis was carried out as a procedure of a first scan and then quenching to remove the thermal history, followed by a second scan.

Referring to Fig. 1, the difference ($\Delta C_p$) in the reversible heat capacity before and after $T_g$ was calculated from the reversible heat capacity curve (a) obtained by first scanning a sample of the polyester film by DSC. Thereafter, the sample of the first scanned polyester film was quenched in a cooler at -5°C to obtain a sample from which the thermal history was removed. The sample from which the thermal history had been removed was subjected to a second scan by DSC, and the difference ($\Delta C^0_p$) in the reversible heat capacity before and after $T_g$ was calculated from the reversible heat capacity curve (b).

In addition, $X_{ma}$ (%) was calculated according to the following equation based on the values obtained through the first and second scans.

$$X_{ma} (\%) = \Delta C_p \, (J/g \cdot K) \, / \, \Delta C^0_p \, (J/g \cdot K) \times 100$$

In addition, referring to Fig. 2, the crystallization temperature ($T_c$) and the melting temperature ($T_m$) were obtained from the non-reversible heat capacity curve of DSC, and their difference ($T_m - T_c$) was calculated.

The results are shown in Table 2 below.

[Table 2]

| | $\Delta C^0_P$ (J/g°C) | $\Delta C_P$ (J/g°C) | $X_{ma}$ (%) | $T_m - T_c$ (°C) |
|---|---|---|---|---|
| Ex. 1 | 0.34 | 0.271 | 79.71 | 81.50 |
| Ex. 2 | 0.33 | 0.256 | 77.58 | 81.99 |
| Ex. 3 | 0.30 | 0.214 | 71.33 | 83.80 |
| Ex. 4 | 0.27 | 0.159 | 58.89 | 88.20 |
| Ex. 5 | 0.33 | 0.069 | 20.91 | 94.96 |
| Ex. 6 | 0.33 | 0.067 | 20.30 | 96.42 |
| Ex. 7 | 0.31 | 0.228 | 73.55 | 83.38 |
| Ex. 8 | 0.28 | 0.189 | 67.50 | 87.33 |
| C. Ex. 1 | 0.22 | 0.084 | 38.18 | 106.17 |
| C. Ex. 2 | 0.20 | 0.048 | 24.00 | 108.46 |
| C. Ex. 3 | 0.19 | 0.033 | 17.37 | 114.96 |

As can be seen from Table 2 above, in the films of Examples 1 to 8, the values of $\Delta C^0_P$, $\Delta C_P$, $X_{ma}$, and $T_m - T_c$ were all within the preferred ranges.

**Test Example 2: Solvent adhesion (seaming characteristics)**

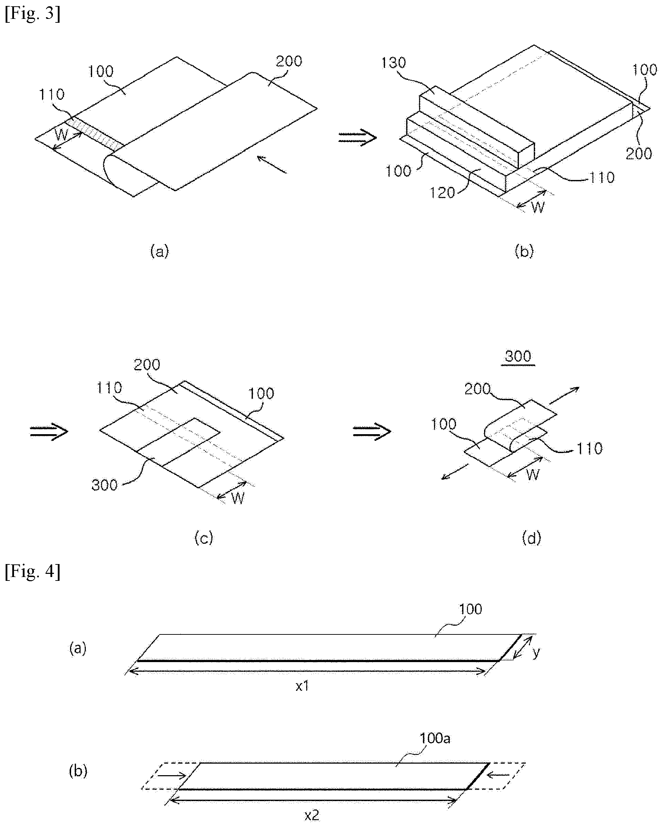

Fig. 3 shows a method of measuring the peel strength of a polyester film. That is, Fig. 3 shows a method of testing the seaming characteristics of a polyester film as adhesive strength by a solvent. Specifically, first, two sample sheets (i.e., a first polyester film and a second polyester film) were each prepared in A4 size. Thereafter, while 1,3-dioxolane was applied to one side of the first polyester film (100) in the form of a band having a width of 2 mm and a length of 30 mm to form an adhesive part (110), the second polyester film (200) was laminated on the first polyester film on which the adhesive part had been formed (see Fig. 3(a)). Here, the adhesive part (110) was formed at a position distanced by 6.5 cm (w) from the upper end of the first polyester film (100). In addition, the area of the adhesive part (110) was 60 mm². Thereafter, in order to prevent the first polyester film and the second polyester film laminated from bending, a pressing plate (120) was placed on the second polyester film. Thereafter, a weight (130) of 2 kg was placed on the pressing plate (120) and aged for 1 hour (see Fig. 3(b)). Here, the weight (130) was placed at the position of the adhesive part (110). Thereafter, the weight (130) and the pressing plate (120) were removed, and the first polyester film and the second polyester film laminated were cut into a width of 3 cm and a length of 9 cm to obtain a sample (300) (see Fig. 3(c)). Thereafter, when the first polyester film (100) and the second polyester film (200) in the sample (300) were delaminated at a speed of 300 mm/minute and an angle of 180°, the maximum force was measured as peel strength (see Fig. 3(d)). The test described above was carried out 5 times, and the average value is shown in Table 3 below.

**Test Example 3: Heat shrinkage rate**

Fig. 4 shows a method of measuring the shrinkage rate of a polyester film. Referring to Fig. 4, a polyester film (100) was cut to have an initial dimension (x1) of 300 mm in the direction to be measured and a dimension (y) of 15 mm in the direction perpendicular thereto. It was immersed in a heated water bath for 10 seconds, and the shrunk dimension (x2) of the polyester film (100a) was measured and calculated according to the following equation. The shrinkage rate (%) in this test example was obtained in the main shrinkage direction (TD) of the film.

$$\text{Shrinkage rate (\%)} = [(x1 - x2) \, / \, x1] \times 100$$

The results of the above test examples are shown in Table 3 below.

[Table 3]

|  | TD shrinkage rate (%) | | | | Solvent adhesive strength |
| --- | --- | --- | --- | --- | --- |
|  | 70°C | 80°C | 90°C | 100°C | (gf/in) |
| Ex. 1 | 51 | 79 | 80 | 80 | 1834 |
| Ex. 2 | 51 | 78 | 79 | 80 | 1641 |
| Ex. 3 | 51 | 75 | 77 | 78 | 1397 |
| Ex. 4 | 50 | 74 | 76 | 77 | 1197 |
| Ex. 5 | 5 | 53 | 74 | 78 | 1212 |
| Ex. 6 | 3 | 27 | 56 | 67 | 352 |
| Ex. 7 | 34 | 69 | 77 | 78 | 1317 |
| Ex. 8 | 37 | 71 | 73 | 77 | 1046 |
| C. Ex. 1 | 50 | 72 | 75 | 75 | 787 |
| C. Ex. 2 | 30 | 70 | 73 | 74 | 638 |
| C. Ex. 3 | 25 | 67 | 70 | 72 | 587 |

As can be seen from Table 3 above, in the films of Examples 1 to 8, the shrinkage rate with respect to temperature in the main shrinkage direction and the solvent adhesive strength were all within the preferred ranges.

[Explanation of Reference Numerals]

100: polyester film (before shrinkage)
100a: polyester film after shrinkage
110: adhesive part
120: pressing plate
130: weight
200: polyester film
300: sample
$T_g$: glass transition temperature
$C_{p1}$: first baseline
$C_{p2}$: second baseline
$\Delta C_p$: difference in heat capacity measured in a first scan
$\Delta C^0_p$: difference in heat capacity measured in a second scan
$C_{total}$: heat flow curve of DSC
$C_{non-rev}$: non-reversible heat flow curve
$C_{rev}$: reversible heat flow curve
x1: first dimension before shrinkage
x1: first dimension after shrinkage
y: second dimension
w: spaced distance

**Claims**

1. A polyester film, which comprises a polyester resin in which three or more diols and a dicarboxylic acid are copolymerized,
wherein the polyester film has a difference in reversible heat capacity ($\Delta C^0_p$) of 0.25 J/g·K or more before and after the glass transition temperature ($T_g$) as measured when it is subjected to a first scan by a differential scanning calorimeter (DSC) from room temperature to 300°C at a temperature elevation rate of 3°C/minute, followed by cooling thereof, and to a second scan under the same conditions.

2. The polyester film of claim 1, wherein the difference between the crystallization temperature ($T_c$) and the melting temperature ($T_m$) is 100°C or less.

3. The polyester film of claim 1, wherein the difference ($\Delta C_p$) in reversible heat capacity before and after the glass transition temperature ($T_g$) measured through the first scan is 0.01 J/g·K to 0.4 J/g·K.

4. The polyester film of claim 3, wherein $X_{ma}$ calculated by the following equation from the $\Delta C^0_p$ and $\Delta C_p$ values is 40% to 90%:

$$X_{ma}\,(\%) = \Delta C_p\,(J/g\cdot K)\,/\,\Delta C^0_p\,(J/g\cdot K) \times 100.$$

5. The polyester film of claim 1, wherein the polyester film has a shrinkage rate of 60% to 80% in the main shrinkage direction upon thermal treatment at a temperature of 100°C for 10 seconds.

6. The polyester film of claim 1, wherein, once two sheets of the polyester film have been adhered by tetrahydrofuran (THF), the peel strength is 200 gf/in or more.

7. The polyester film of claim 1, wherein the diol comprises ethylene glycol and, as a comonomer, at least one selected from the group consisting of neopentyl glycol, cyclohexanedimethanol, and diethylene glycol in an amount of 20% by mole to 40% by mole.

8. The polyester film of claim 1, wherein the diol comprises at least one selected from neopentyl glycol and cyclohexanedimethanol in an amount of 20% by mole to 30% by mole; and diethylene glycol in an amount of 1% by mole to 15% by mole.

9. A heat shrinkable label, which comprises the polyester film of claim 1.

10. A heat shrinkable packaging material, which comprises the polyester film of claim 1.

[Fig. 1]

[Fig. 2]

[Fig. 3]

(a)

(b)

(c)

(d)

[Fig. 4]

(a)

(b)

## INTERNATIONAL SEARCH REPORT

| International application No. |
| --- |
| **PCT/KR2022/006017** |

### A. CLASSIFICATION OF SUBJECT MATTER

**C08J 5/18**(2006.01)i; **C08L 67/02**(2006.01)i; **C08G 63/16**(2006.01)i; **C08G 63/199**(2006.01)i

According to International Patent Classification (IPC) or to both national classification and IPC

### B. FIELDS SEARCHED

Minimum documentation searched (classification system followed by classification symbols)

C08J 5/18(2006.01); C08G 63/16(2006.01); C08G 63/183(2006.01); C08G 63/199(2006.01); C08G 63/688(2006.01); C08G 63/90(2006.01); C08J 3/22(2006.01); C08L 67/03(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르(polyester), 필름(film), 에틸렌글리콜(ethylene glycol), 1,4-시클로핵산디메탄올(1,4-cyclohexanedimethanol), 네오펜틸글리콜(neopentylglycol), 디에틸렌글리콜(diethylene glycol), 디카복실산(dicarboxylic acid), 열용량(heat capacity)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-0600638 B1 (TOYO BOSEKI KABUSHIKI KAISHA) 13 July 2006 (2006-07-13) <br> See claims 1-24; paragraph [0152]; and example 1. | 1-10 |
| A | KR 10-2019-0115965 A (SK CHEMICALS CO., LTD.) 14 October 2019 (2019-10-14) <br> See entire document. | 1-10 |
| A | KR 10-2004-0096190 A (HUVIS CORPORATION) 16 November 2004 (2004-11-16) <br> See entire document. | 1-10 |
| A | KR 10-2016-0079358 A (TORAY CHEMICAL KOREA INC.) 06 July 2016 (2016-07-06) <br> See entire document. | 1-10 |
| A | KR 10-2015-0077359 A (SK CHEMICALS CO., LTD.) 07 July 2015 (2015-07-07) <br> See entire document. | 1-10 |

☐ Further documents are listed in the continuation of Box C.　　☑ See patent family annex.

| | |
| --- | --- |
| *　Special categories of cited documents: <br> "A"　document defining the general state of the art which is not considered to be of particular relevance <br> "D"　document cited by the applicant in the international application <br> "E"　earlier application or patent but published on or after the international filing date <br> "L"　document which may throw doubts on priority claim(s) or which is cited to establish the publication date of another citation or other special reason (as specified) <br> "O"　document referring to an oral disclosure, use, exhibition or other means <br> "P"　document published prior to the international filing date but later than the priority date claimed | "T"　later document published after the international filing date or priority date and not in conflict with the application but cited to understand the principle or theory underlying the invention <br> "X"　document of particular relevance; the claimed invention cannot be considered novel or cannot be considered to involve an inventive step when the document is taken alone <br> "Y"　document of particular relevance; the claimed invention cannot be considered to involve an inventive step when the document is combined with one or more other such documents, such combination being obvious to a person skilled in the art <br> "&"　document member of the same patent family |

| Date of the actual completion of the international search | Date of mailing of the international search report |
| --- | --- |
| **22 September 2022** | **22 September 2022** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/006017**

| Patent document cited in search report | | | Publication date (day/month/year) | Patent family member(s) | | | Publication date (day/month/year) |
|---|---|---|---|---|---|---|---|
| KR | 10-0600638 | B1 | 13 July 2006 | CN | 100365040 | C | 30 January 2008 |
| | | | | CN | 1646598 | A | 27 July 2005 |
| | | | | EP | 1462469 | A1 | 29 September 2004 |
| | | | | EP | 1462469 | A4 | 13 October 2004 |
| | | | | EP | 1462469 | B1 | 21 March 2007 |
| | | | | JP | 2004-256819 | A | 16 September 2004 |
| | | | | JP | 3565223 | B2 | 15 September 2004 |
| | | | | KR | 10-2004-0082435 | A | 24 September 2004 |
| | | | | US | 2004-0236063 | A1 | 25 November 2004 |
| | | | | US | 7439317 | B2 | 21 October 2008 |
| | | | | WO | 03-085027 | A1 | 16 October 2003 |
| KR | 10-2019-0115965 | A | 14 October 2019 | WO | 2019-194495 | A1 | 10 October 2019 |
| KR | 10-2004-0096190 | A | 16 November 2004 | | None | | |
| KR | 10-2016-0079358 | A | 06 July 2016 | KR | 10-2288463 | B1 | 09 August 2021 |
| KR | 10-2015-0077359 | A | 07 July 2015 | KR | 10-2169415 | B1 | 23 October 2020 |
| | | | | WO | 2015-099494 | A1 | 02 July 2015 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20020062838, Thus